# EUROPEAN PATENT SPECIFICATION

(11) **EP 2 677 390 B1**
(45) Date of publication and mention of the grant of the patent: **24.03.2021**
(21) Application number: 13171099.8
(22) Date of filing: 07.06.2013
(51) Int. Cl.: G06F 1/16

(54) **Smart Cover Peek**
Smart-cover-peek
Pic de couvercle intelligent

(30) Priority: 08.06.2012 US 201261657693 P; 11.09.2012 US 201213610514
(43) Date of publication of application: 25.12.2013
(73) Proprietor: Apple Inc., Cupertino CA 95014 (US)
(72) Inventor: Zambetti, Nicholas, Cupertino, CA California 95014 (US); Brown, Matthew Irvine, Cupertino, CA California 95014 (US); Bernstein, Jeffrey Traer, Cupertino, CA California 95014 (US); Rohrbach, Matthew Dean, Cupertino, CA California 95014 (US); Kerr, Duncan R, Cupertino, CA California 95014 (US); Chaudhri, Imran, Cupertino, CA California 95014 (US); Meade, Paul, Cupertino, CA California 95014 (US); Franklin, Jeremy C, Cupertino, CA California 95014 (US); Cretella, Michael A, Cupertino, CA California 95014 (US); Khoe, May-Li, Cupertino, CA California 95014 (US)
(74) Representative: Black, Diego

(56) References cited:
- EP-A2- 2 431 835
- WO-A1-2010/028405

## Description

### FIELD OF THE INVENTION

The invention relates to an electronic device having a protective cover and a method of operating it.

### DESCRIPTION OF THE RELATED ART

Recent advances in portable computing includes the introduction of hand held electronic devices and computing platforms along the lines of the iPad™ tablet manufactured by Apple Inc. of Cupertino, CA. These handheld computing devices can be configured such that a substantial portion of the electronic device takes the form of a display used for presenting visual content. Generally, these displays consume a substantial amount of power that can have the effect of greatly shortening an amount of time the hand held computing device can operate using battery power. In some situations, information can be presented that does not require that the entire display be viewable. For example, a tablet device can provide limited information that requires less than the entire available display area.

It is desirable for a portable electronic device, such as a tablet device, to present information in accordance a viewable portion of the display.

EP2431835 discloses a magnetic attachment mechanism and method. The magnetic attachment mechanism can be used to releasably attach at least two objects together in a preferred configuration without fasteners and without external intervention. The magnetic attachment mechanism can be used to releasably attach an accessory device to an electronic device. The accessory device can be used to augment the functionality of usefulness of the electronic device.

WO2010/028405 discloses methods, apparatuses, and computer-readable storage media for displaying an image at an electronic device. In a particular embodiment, an electronic device is disclosed that includes a first panel having a first display surface to display a graphical user interface element associated with an application. The electronic device also includes a second panel having a second display surface. The first display surface is separated from the second display surface by a gap. A processor is configured to execute program code including a graphical user interface. The processor is configured to launch or close the application in response to user input causing a movement of the graphical user interface element in relation to the gap.

### SUMMARY OF THE DESCRIBED EMBODIMENTS

This paper describes various embodiments that relate to a system, method, and apparatus for releasably attaching an accessory to an electronic device.

A protective cover is described. The protective cover includes at least a first attachment mechanism configured for attaching the protective cover to a host device. The host device includes a display configured to present visual content, at least one processor coupled to the display, and at least a first and a second sensor coupled to the at least one processor and each being configured to detect a first and second detectable object, respectively, and provide a corresponding first and second detection signal to the at least one processor. The protective cover also includes a flap comprising at least a first foldable segment at a first end of the flap and a second foldable segment at a second end of the flap, opposite the first end, the first and second segments being detectable, respectively, by the first and second sensors. The processor uses the first and the second detection signals in combination to determine an amount of viewable display and to present visual content only in accordance with the amount of viewable display.

In one embodiment, the flap is folded in the first folded configuration to reveal a first viewable portion of the display such that an application presents visual content only in the first viewable portion. In one embodiment, the flap is folded in the second folded configuration to reveal a second viewable portion of the display that is more than the first viewable portion such that the application presents visual content in the second viewable portion. In one embodiment, the application responds to a touch event at first and second viewable portions of the display.

In one embodiment, an electronic device is described. The electronic device includes a display configured to present visual content, one or more processing units; and a plurality of sensors at least one of which is configured to detect a complementary object and send a detection signal to the one or more processing units. The one or more processing units determines a configuration of a foldable flap with respect to the electronic device using data from the plurality of sensors and causes the electronic device to set an operating state in accordance with the determined configuration.

When one or more processing units determines that the foldable flap is partially covering the display, then the one or more processing units causes the electronic device to set the operating state to a peek mode. In the peek mode of operation, the electronic device presents visual content on a viewable portion of the display that is not covered by the foldable flap.

In another embodiment an electronic device is described. The electronic device includes at least a housing having side walls and a front facing opening. a processor disposed within the housing, a first and a second sensor configured to detect a first and second complementary object, respectively, the sensors disposed in the housing and coupled to the processor each configured to send respective detection information to the processor. The electronic device also includes a display coupled to the processor and configured to present visual content, the display is disposed within the front facing opening and has a topmost protective layer. The electronic device further includes an attachment mechanism disposed at a first side wall of the housing and configured to attach the electronic device to a first end of a cover. The cover includes a first segment at the first end, a second segment at a second end detectable only in proximity to the first sensor, the second segment opposite the first end. In a first folded state, the second segment is folded away from the display and is not detectable by the first sensor and the first segment is detectable by the second sensor each of which sends detection information to and is used by the processor to determine that only a first portion of the display corresponding to the second segment is viewable corresponding to a first peek mode. In the first peek mode, presentation of the visual content is limited to the first viewable portion.

In yet another embodiment, a method for operating a tablet device in accordance with a folded state of a cover attached thereto is described. The tablet device includes a display configured to present visual content, one or more processing units, and a plurality of sensors at least one of which is configured to detect a complementary object and send an appropriate detection signal to the one or more processing units. The cover includes a plurality of independently foldable segments comprising a first segment at a first end having the complementary object, and a second segment at a second end opposite the first end. The method is carried out by confirming that the cover and the tablet device are attached to each other at the second end and performing the following operations only when the attachment is confirmed: detecting the complementary object in the first segment by a corresponding one of the plurality of sensors in the tablet device, receiving detection information from the detecting sensor, determining a folded configuration of the cover with respect to the tablet device in accordance with the detection information, and operating the tablet device in accordance with the folded configuration.

Other aspects and advantages of the invention will become apparent from the following detailed description taken in conjunction with the accompanying drawings which illustrate, by way of example, the principles of the described embodiments.

### BRIEF DESCRIPTION OF THE DRAWINGS

The invention will be readily understood by the following detailed description in conjunction with the accompanying drawings, wherein like reference numerals designate like structural elements, and in which:
Fig. 1 shows a closed configuration of the cooperating system formed by the tablet device and protective cover.
Fig. 2 shows an open configuration of the cooperating system shown in Fig. 1.
Fig. 3 shows a top view of an embodiment of a segmented cover.
Figs. 4A - 4C shows a foldable cover in varying spatial relationships with respect to tablet device.
Figs. 5A and Fig. 5B show representative peek mode functionality in accordance with the described embodiments.
Figs. 6A and Fig. 6B show additional peek mode functionality in accordance with the described embodiments.
Fig. 7 shows a peek mode state diagram in accordance with the described embodiment.
Fig. 8 shows a flowchart detailing a process for determining a configuration of magnetic elements in a magnetic attachment system in accordance with the described embodiments.
Fig. 9 is a block diagram of an arrangement of functional modules utilized by a portable media device.
Fig. 10 is a block diagram of an electronic device suitable for use with the described embodiments.

### DETAILED DESCRIPTION OF SELECTED EMBODIMENTS

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents included within the scope of the appended claims.

An electronic device responsive to a spatial relationship between the electronic device a moveable accessory device attached thereto is described. In one embodiment, the electronic device can take the form of a tablet device that can include at least a display configured to present visual content and at least a number of sensors. In one embodiment, the moveable accessory device can take the form of a flap that can be pivotally attached to the tablet device, the flap having a size and shape in accordance with the display. The flap can be configured to include any number of foldable segments. For example, the flap can include two segments or the flap can include three or more segments. For example, when the flap includes three or more segments, the electronic device can determine a spatial relationship between the first, second, and third segments and the display using a first, second, and third sensor disposed in the tablet device. The first, second, and third sensors can cooperate with each other by detecting magnetic fields generated by magnets and based upon the detection, a signal is provided to the tablet device that alters a current operating state of the tablet device in accordance with the detected spatial relationship between the segments and the display.

In one embodiment, when the first sensor detects the magnetic field from the first magnet in the first segment, then the tablet device disables the display. However, when the first sensor does not detect the magnetic field from the first magnet and the second sensor does detect the magnetic field from the second magnet, then the tablet device operates in a first peek mode by displaying visual content only in a first viewable portion of the display. The first viewable portion of the display corresponding to that portion of the display covered by the first segment when the flap fully covers the display in a closed configuration. In one embodiment, when the first sensor and the second sensor do not detect magnetic fields from the first magnet and the second magnet, respectively, and the third sensor does detect a magnetic field from the third magnet, and then the tablet device operates in a second peek mode in which an second viewable portion of the display presents visual content. The second viewable portion of the display corresponds to that portion of the display covered by the first and second segments when the flap covers the entire display in the closed configuration.

In one embodiment, the tablet device can present visual content in accordance with the current operating state of the tablet device. For example, in the first peek mode, the tablet device can operate to present visual content in only the first viewable portion of the display. Furthermore, the tablet device can execute an application in accordance with the current operating state of the tablet device. For example, in the first peek mode, the tablet device can execute a mail application by presenting visual content only in the first viewable portion of the display. The visual content can take the form of an icon indicating that unopened mail is available for viewing. The tablet device transitions from the first peek mode to the second peek mode, the tablet device can execute the mail application in accordance with the second peek mode. For example, in the first peek mode, the mail application can present a snippet of an email (such as a subject line). However, when the tablet device transitions from the first to the second peek mode by the second segment being lifted from the display (rendering the second magnet not detected by the second sensor), the tablet device can change the displayed email snippet (the subject line, for example) to a larger portion of the email message in accordance with the increased amount of display that is viewable. For example, if sufficient display resources are available, the entire email message can be displayed or the email message can be scrolled using, for example, a scrolling finger gesture applied to a touch sensitive layer corresponding to the viewable portion of the display.

In another embodiment, the tablet device can operate a touch sensitive layer disposed beneath the display in accordance with the current operating state of the tablet device. For example, in the first peek mode, the touch sensitive layer can respond to a touch event at the first viewable portion in accordance with the first peek mode. For example, the response to the touch event in the first peek mode can affect only the displayed visual icons. In this way, the response of the tablet device to a touch event in the first peek mode can be different than the response of the tablet device to the same touch event in the second peek mode.

In one embodiment, the tablet device can display an indication of an amount of the amount of the display that is available for presentation of visual content. For example, in a first or second peek mode, the indication can take the form of a line displaying the amount of the display that is available for presentation of visual content in the form of a number of pixels available for forming visual content.

In one embodiment, control elements used to control applications can be presented in the viewable area. The control elements can include elements of a user interface that can be used to control volume; media item selection, video selection, and so forth. In one embodiment, the tablet device can present visual media in the viewable area. The visual media can take the form of still images. The visual media can also take the form or moving images and/or video. In one embodiment, the visual media can be presented in accordance with the current operating state of the tablet device. For example, when the display is completely uncovered, then an image (or video) can be presented in a native format and or aspect ratio. However, when the tablet device transitions to a standard operating mode (with the display completely uncovered) to a first peek operating mode, then the image (or video) can be presented in accordance with the first viewable portion of the display. For example, the aspect ratio and or resolution of the image (or video) can be altered to fit the available display area.

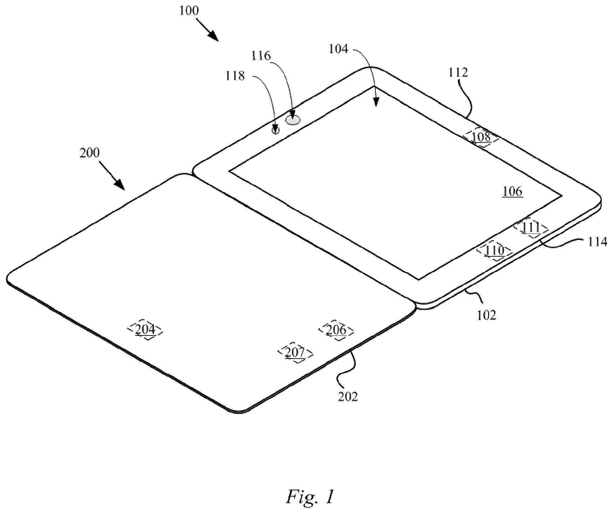

These and other embodiments are discussed below with reference to Figs. 1 - 10. However, those skilled in the art will readily appreciate that the detailed description given herein with respect to these figures is for explanatory purposes only and should not be construed as limiting.

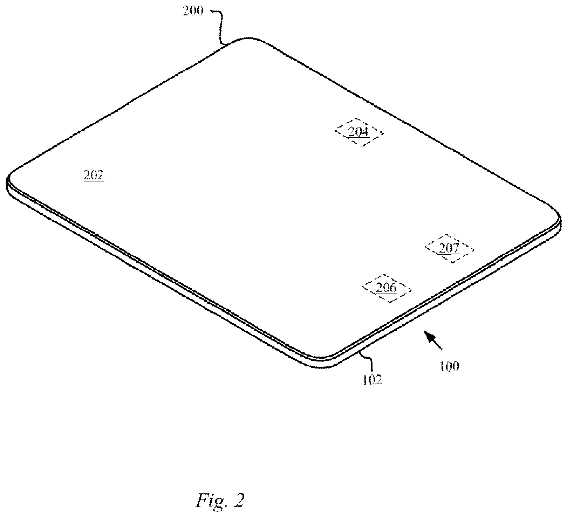

The remainder of this discussion will describe particular embodiments of electronic devices that can operate in accordance with a spatial relationship between the device and an accessory device attached thereto. In particular, Fig. 1 and Fig. 2 show electronic device 100 presented in terms of tablet device 100 and accessory device 200 in the form of foldable cover 200. Fig. 1 shows a perspective view of tablet device 100 and foldable cover 200 in an open configuration whereas Fig. 2 shows a perspective view of tablet device 100 and foldable cover 200 in a closed configuration. Tablet device 100 can take the form of a tablet computing device such as the iPad™ manufactured by Apple Inc. of Cupertino, CA.

Referring now to Fig. 1 showing foldable cover 200 in an open configuration. Tablet device 100 can include housing 102 that can enclose and support a magnetic attachment feature that provides magnetic surface suitable for magnetically attaching foldable cover 200 and tablet device 100. Housing 102 can also enclose and support internally various structural and electrical components (including integrated circuit chips and other circuitry) to provide computing operations for tablet device 100. Housing 102 can include display assembly 104 for presenting visual content at a display layer (not shown). The visual content that can include visual, still images, as well as icons such as graphical user interface (GUI) that can provide information the user (e.g., text, objects, graphics). Display assembly 104 underlying cover glass 106 can be used to display images using any suitable display technology, such as LCD, LED, OLED, electronic or e-inks, and so on.

Display assembly 104 can include a number of other layers such as a touch sensitive layer providing a mechanism for receiving a tactile event at tablet device 100 using a touch input. In the described embodiment, display assembly 104 is protected by a topmost layer taking the form of transparent cover glass 106 formed of polycarbonate or other appropriate plastic or highly polished glass that fully covers display assembly 104. In some embodiments, a display mask can be applied to, or incorporated within or under cover glass 106. The display mask can be used to accent an unmasked portion of the display used to present visual content and can be used to make less obvious the magnetic attachment feature disposed within housing 102.

Tablet device 100 can include various sensors that can be placed in any number of suitable locations. In one embodiment, sensors 108, 110, 111 can be placed on edge 112 and edge 114, respectively, of tablet device 100. It should be noted, however, that the number of sensors and their placement can be widely varied. Sensors 108, 110, and 11 can take many forms and can be configured to detect any number and type of external stimulus. For example, sensor 108 can take the form of a Hall Effect sensor (HFX) that can detect an external magnetic field and respond by providing a signal to a processor in tablet device 100. The processor can, in turn, respond to the signal from HFX sensor 108 by altering a current operating state of tablet device 100. Similarly, sensor 110 can also be an HFX sensor that can cooperate with HFX sensor 108. It should be noted, however, the sensors 108, 110 can be any sensor (optical, tactile, etc.) and any combination of sensors deemed appropriate. Other sensors can include optical sensors. For example, when tablet device 100 includes an image capture device such as camera 116, then camera 116 can be used to determine if flap 202 is in a closed position. Camera 116 can periodically capture an image and based upon the image, provide information that can be used to determine if flap 202 is in the closed configuration. In some instances, using camera 116 can be adverse to battery operation. In those situations, an optical sensor such as ambient light sensor (ALS) 118 can be used to sense an amount of ambient light. Clearly, if flap 202 is covering ALS 118, then ALS will not detect any ambient light and that information can be used to deduce the position of flap 202 with respect to tablet 100.

Accessory device 200 can take the form foldable cover 200. Foldable cover 200 can have a look and feel that complements that of the tablet device 100 adding to overall look and feel of tablet device 100. Foldable cover 200 can include flap 202. Flap 202 can be formed from a single piece of foldable or pliable material. In some embodiments, flap 202 can also be divided into segments separated from each other by a folding region. In this way, the segments can be folded with respect to each other and tablet device 100 at the folding regions. In one embodiment, flap 202 can be formed of layers of material attached to one another forming a laminate structure. Each layer can take the form of a single piece of material that can have a size and shape in conformance with flap 202. Each layer can also have a size and shape that correspond to only a portion of flap 202. For example, in the case of a segmented flap, a layer of rigid or semi-rigid material about the same size and shape of a segment can be attached to or otherwise associated with the segment. In another example, a layer of rigid or semi-rigid material having a size and shape in accordance with flap 202 can be used to provide foldable cover 200 as a whole with a resilient foundation. It should be noted that the layers can each be formed of materials having desired properties. Flap 202 can also include magnets 204 and 206 detectable by sensors 108 and 110 respectively.

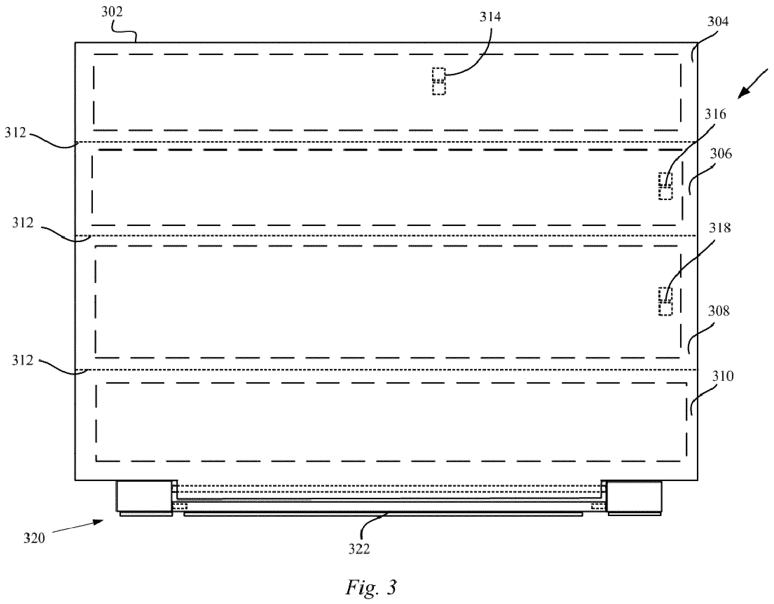

Fig. 2 shows foldable cover 200 in closed configuration. More specifically, flap 202 can be pivotally connected to tablet device 100 by way of a hinge assembly 208. Hinge assembly 208 can include magnets or a magnetically attractable element that creates a magnetic circuit with corresponding magnets in tablet device 100. In this embodiment, the magnetic attachment force between hinge assembly 208 and tablet device 100 can maintain foldable cover 200 and tablet device 100 in a proper orientation and placement vis-a-vis flap 202 and cover glass 106. By proper orientation it is meant that foldable cover 200 can only properly attach to tablet device 100 having flap 202 and cover glass 106 aligned in a mating engagement. The mating arrangement is such that flap 202 covers substantially all of cover glass 106 when flap 202 is placed in contact with cover glass 106 in the closed configuration. In one embodiment, tablet device 100 can include a sensor, or sensors, that can detect whether or not foldable cover 200 is attached to tablet device 100. For example, when the attachment mechanism is magnetic in nature, then the sensor can be a HFX sensor that can detect the presence of a magnetic field from magnets disposed in the hinge assembly. In one embodiment, flap 202 can include magnets positioned in such a way as to be detectable by HFX sensors in tablet device 100 when foldable cover 200 is in the closed configuration or a partially open configuration described below. For example, magnet 204 can be detectable by HFX 108 whereas magnets 206 and 207 can be detectable by HFX sensors 110 and 111, respectively. An arrangement of magnets (or other objects that can be detected by an appropriate sensor) along an edge 114 can facilitate the determination of a spatial relationship between tablet device 100 and flap 202. This is particularly true in those situations where flap 202 is segmented in such a way that at least two segments include at least one detectable object (such as a magnet) each that can be readily detected by corresponding sensors (such as HFX sensors) in tablet device 100. A specific example of a segmented flap is described below with reference to Fig. 3.

Fig. 3 shows a top view of a specific embodiment of foldable cover 300 in the form of segmented cover 300. Segmented cover 300 can include flap 302. In a specific embodiment, flap 302 can be partitioned into a number of segments 304 - 310 interspersed with thinner, foldable portions 312. Each of the segments 304 - 310 can include one or more inserts disposed therein. Segments 304 - 310 can each include inserts that that can be used to provide structural support for segmented flap 302. That is, the inserts can provide stiffness to foldable cover 300. Flap 302 can include a number of magnets. For example, segment 304 can include magnet(s) 314, segment 306 can include magnet(s) 316, and segment 308 can include magnet(s) 318. In the described embodiment, the magnets in segmented flap 302 are detectable by sensors in tablet device 100. The sensors in tablet device 100 can cooperate to determine a spatial relationship between cover assembly 300 and tablet device 100 and more particularly, cover glass 106. Cover assembly 300 can pivotally attach to tablet device 100 using hinge assembly 320 that can provide one or more pivots to allow cover assembly 300 to fold over on display 104 while cover assembly 300 is attached to tablet device 100. Hinge assembly 300 can include magnetically attractable elements (such as magnets) disposed with hinge span 322. The magnets can interact with magnetic surface 101 to releasably attach cover assembly 300 and tablet device 100.

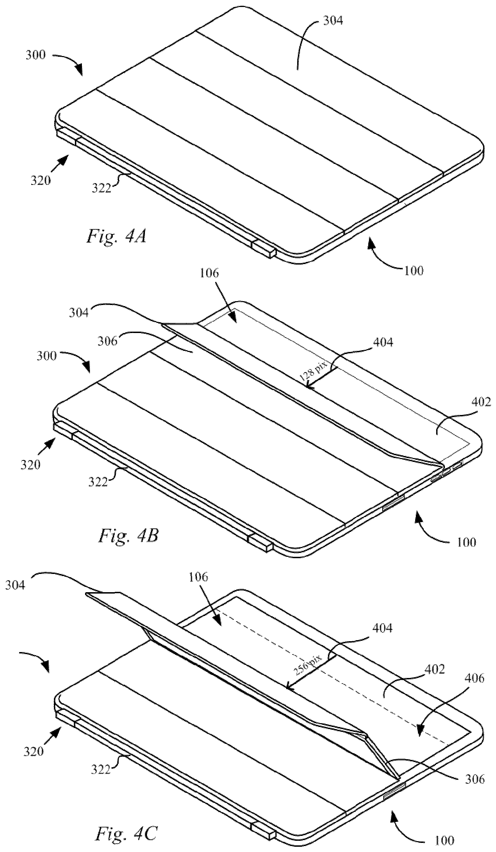

Figs. 4A - 4C shows foldable cover 300 in varying spatial relationships with respect to tablet device 100. For example, Fig. 4A shows foldable cover 300 in the closed configuration completely covering cover glass 106. In this arrangement, tablet device 100 can operate in what can be referred to as standard mode in which in one embodiment, display assembly 104 is not active and does not present any visual content.

However, when segment 304 is lifted from glass cover 106, sensor 108 in tablet device 100 can no longer detect magnet 204 in foldable cover 300. In contrast, sensor 110 can detect magnet 206 since segment 306 remains in contact with cover glass 106 and the magnetic field from magnet 206 remains detectable by sensor 110. In this way, tablet device 100 can evaluate signals from sensors 108 and 110 to deduce that segment 304 and only segment 304 has been lifted from cover glass 106 revealing exposed portion 402. Accordingly, tablet device 100 can change a current operating state to a first peek mode in which display 104 presents visual content only at exposed portion 402. For example, tablet device 100 can display indicator 404 showing an amount of display resources (in this case the number of pixels) available for display. Moreover, as shown in Fig. 4C when segment 306 is not lifted to reveal an additional portion 406 of cover glass 106, neither sensor 108 nor sensor 110 can detect a magnetic field. In this situation, another sensor (such as an optical sensor or an additional HFX sensor) to confirm that only segments 304 and 306 are lifted from cover glass 106. In this case, tablet device 100 can deduce that only segments 304 and 306 are lifted and respond by entering what is referred to as a second peek mode in which extended portion 404 of display 104 presents visual content. In this case, indicator 404 can be modified to reflect the larger amount of display resource (258 pixels) now available for presenting visual content. Hence, information in the form of visual content such as time of day, notes, and so forth can be presented for viewing on only that portion of display viewable.

For example, when Hall Effect sensor 108 detects that cover assembly 300 is in contact with cover glass 106 indicating that the display is not viewable, then the signal sent by Hall Effect sensor 108 can be interpreted by a processor in tablet device 100 to change the current operating state to sleep state. On the other hand, when segment 304 is lifted from cover glass 106, Hall Effect sensor 108 can respond to the removal of the magnetic field from magnetic 204 by sending another signal to the processor. The processor can interpret this signal by again altering the current operating state. The altering can include changing the operating state from the sleep state to an active state. In another embodiment, the processor can interpret the signal sent by Hall Effect sensor 108 in conjunction with other sensors by altering the operating state of tablet device 100 to a peek mode in which only that portion of the display exposed by the lifting of segment 304 is activated and capable of displaying visual content and/or receiving (or sending) tactile inputs.

In some cases, when segment 306 is lifted from cover glass 106 at the same time that Hall Effect sensor 108 indicates that segment 304 is also lifted, the presence of sensors in addition to Hall Effect sensor 108 can cause the processor to enter into an extended peek mode in which additional display resources corresponding to the additional exposed portion of the display are also activated. For example, if tablet device 100 includes other sensors (such as optical sensors) that can detect the presence of a particular segment, then signals from Hall Effect sensor 108 in combination with other sensor signals can provide an indication to the processor that a particular portion or portions of the display assembly are currently viewable and can thus be enabled to present visual content.

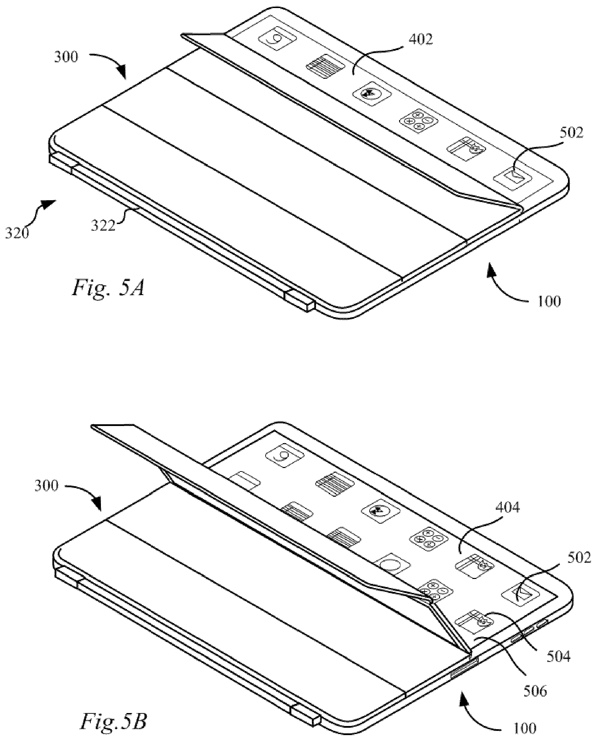

Turning now to Fig. 5A, when tablet device 100 has determined that only segment 304 has been lifted, then tablet device 100 can change operating state to "first peek" state in which only the exposed portion 402 of the display actively presents visual content in the form of icons 502. Hence, information in the form of visual content such as time of day, notes, and so forth can be presented for viewing on only that portion of display viewable. Once the sensors detect that segment 304 has been placed back on glass layer 106, tablet 100 can return to the previous operational state such as a sleep state. Furthermore, in another embodiment, when an icon arranged to respond to a touch is displayed, then that portion of a touch sensitive layer corresponding to the visible portion of the display can also be activated.

Furthermore, as shown in Fig. 5B, when additional segments (such as segment 306) are lifted from cover glass 106 to further expose portions of cover glass 106, second portion 406 of display assembly 104 can present visual content. In this way, in the "extended" or second peek mode, additional visual information, such as icons 504 (in addition to or in place of icons 502), can be presented extended portion 506 of display assembly 104. It should be noted that as segments are lifted from cover glass 106, the current operating state of tablet device 100 can change such that additional segments of the display can present visual content.

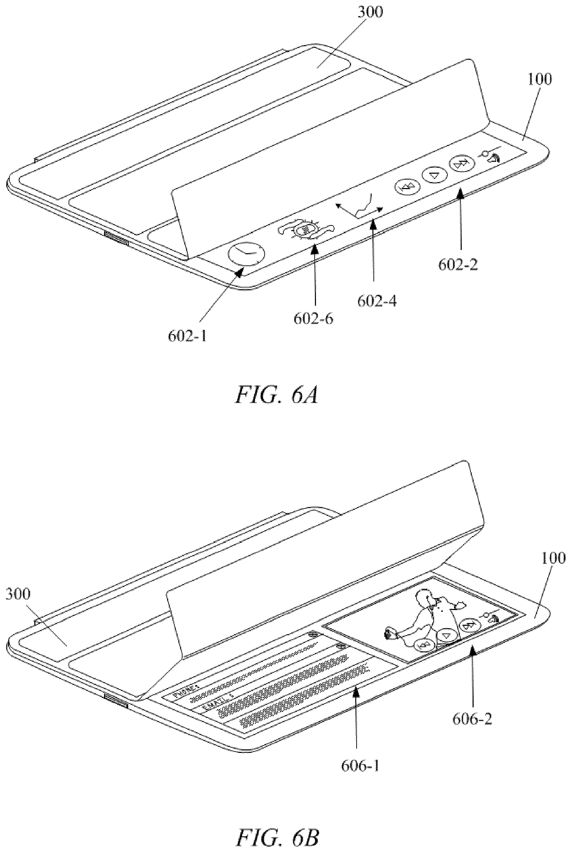

Fig. 6A and Fig. 6B shows a situation where the spatial relationship between foldable cover 300 and tablet device 100 can result in tablet device 100 operating in a peek mode in accordance with the described embodiments. More particularly, Fig. 6A illustrates the spatial relationship between foldable cover 300 and tablet device 100 can cause tablet device 100 to operate in the first peek mode. In the described embodiments, tablet device 100 operates in the first peek mode when segment magnet 206 is not detected by sensor 108 and magnet 204 is detected by sensor 110 indicating that only segment 304 is lifted thereby uncovering portion 404 of cover glass 106. Accordingly, in first peek mode, icons 602 or other visual elements can be displayed only in viewable portion 604 of display assembly 104 of tablet device 100. Icons 602 can be simply display type icons or in some instances, some or all of icons 602 can be user interactive. For example, icon 602-1 can display a clock showing the current time whereas icon 602-2 can represent graphical user interfaces in the form of a control panel used to modify operations of a media player function performed by tablet device 100. Other icons can include, icon 602-3 representing current weather conditions, icon 602-4 representing a stock market result, and so on.

Fig. 6B, on the other hand, illustrates second (or extended) peek mode in which additional functionality can be enabled when it is determined that more than a portion 404 of display assembly 104 is viewable in the form of portion 406 when segment 306 and segment 304 are each lifted. Tablet 100 can deduce that only segments 304 and 306 are lifted when neither sensor 108 nor 110 can detect magnets 204 and 208. In order to distinguish from the open configuration, a third sensor (possible in the form of an additional HFX sensor) can be used to determine that segment 308 remains in contact with cover glass 106. Therefore, in second peek mode, additional information available in portions of foldable cover 300 in contact with display assembly 104 can cause tablet device 100 to alter its operating state along the lines disclosed. For example, in second peek mode, an additional display area that can be rendered viewable can be used to present video 606 (with overlaid user interface 602-1 or equivalent), textual data 606 and so on.

It should be noted that tablet device 100 can transition directly from the first peek mode to the open configuration and from the open configuration directly to the first peek mode. In these situations, an application (such as an email application) can be set to display visual information in accordance with the operating state of tablet device 100. For example, if tablet device 100 is in the open configuration and is displaying desktop icons consistent with a standard operating mode, if tablet device 100 determines that foldable cover 300 is now positioned in a manner consistent with the first peek mode, then the email application will immediately transition from the standard mode of operation to a mode of operation in accordance with the first peek mode. For example, the email application can present a full email in the standard mode but can transition to presenting only a subject line (or other visual information) consistent with the available display resources.

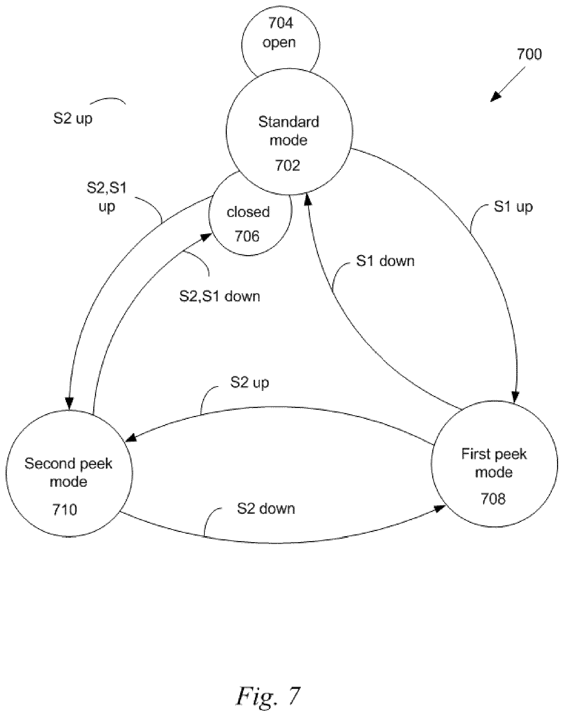

Fig. 7 shows state peek mode state diagram 700 in accordance with the described embodiments. It should be noted that although peek mode state diagram shows three tablet device operating states (standard, first peek, second peek), the number of operating states can be related in some embodiments to the number of foldable segments. For example, if *n* represents the number of foldable segments, then there can be *n* - *1* peek modes available (assuming that there is adequate sensor resources for the tablet device). Moving on to Fig. 7, tablet device 100 can operate in a standard operating mode at 702 when tablet device 100 determines that foldable cover 300 is in either the open configuration or the closed configuration. In the open configuration (704), display assembly 104 is able to present visual content without restriction. In the closed configuration (706), display assembly 104 is prevented from presenting any visual content (in order to preserve battery resources) since all of cover glass 106 is unviewable.

When tablet device 100 is in the standard mode (702) and segment 304 (represented as "S1") is lifted, then tablet device 100 determines that only segment 304 is lifted and changes to first peek mode operating state (708). In the first peek mode operating state, any visual content presented by display assembly 104 is limited to that portion of display assembly 104 that is determined to be viewable consistent with segment 304 being lifted. In first peek mode, when segment 304 is no longer lifted from tablet device 100, then tablet device 100 returns to standard mode (700) and more particularly, the closed configuration. However, when tablet device 100 is in the first peek mode (708) and segment 306 ("S2") is determined to be lifted by tablet device 100, then tablet device 100 changes to a second peek mode (710). In the second peek mode, visual content is presented by display assembly 104 in only that portion determined to be viewable.

When tablet device 100 determines that segment 306 is not lifted, and then tablets device 100 transitions from the second peek mode to the first peek mode. Also, when tablet device is in the second peek mode and tablet device 100 determines that both segments are not lifted, and then tablet device 100 transitions directly from second peek mode to standard mode consistent with foldable cover being in the closed configuration. Conversely, tablet device 100 can transition directly from the standard mode consistent with the closed configuration when segments 304 and 306 are both lifted concurrently. Also in the second peek mode, tablet device 100 can transition directly to the standard mode consistent with foldable cover being in the open configuration when all remaining segments of foldable cover 300 are lifted.

It should also be noted, that applications can be executed in accordance with the current operating state of tablet device 100. For example, an application running in first peek mode can immediately transition to a second peek mode (and vice versa). In the case of an email application, a full version of an email message can be presented in the standard mode, a smaller version (possibly just a pre-defined summation) in the second peek mode, and only a subject line in the first peek mode. It should be appreciated that a user can provide peek mode settings which can determine how tablet device 100 responds to foldable cover 300 being positioned in a manner consistent with a peek mode.

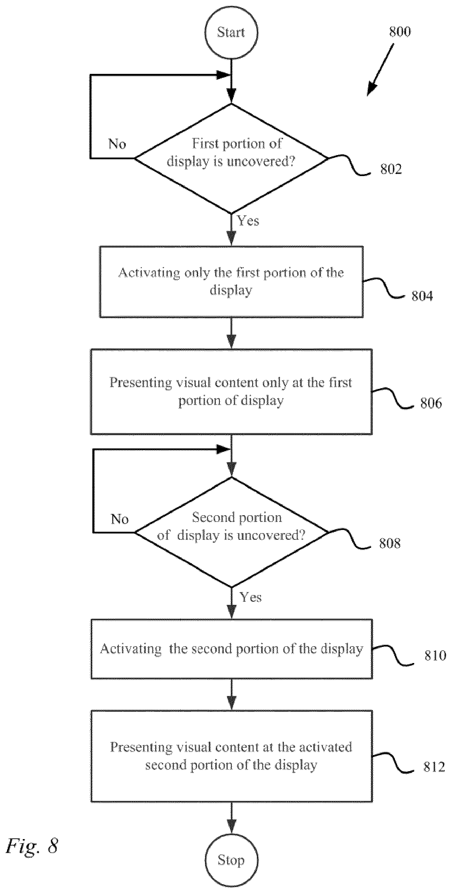

Fig. 8 shows a flowchart detailing a peek mode process 800 in accordance with the described embodiments. Process 800 can begin at 802 by determining if a first portion of a display is uncovered. By uncovered it is meant that visual content presented at the first portion can be viewed. When it is determined that the first portion of the display is uncovered, then at 804, only that portion of the display that is determined to be uncovered can present visual content. In other words, a set of icons or other visual content can be displayed in the uncovered portion of the display, where the remainder of the display can remain blank or off. Next at 806, visual content is displayed by the activated portion of the display. Next at 808, a determination is made if a second portion of the display is uncovered, the second portion being different than the first portion. When it is determined that the second portion of the display is uncovered, then a second portion of the display is activated at 810. Visual content is then displayed at the second activated portion at 812.

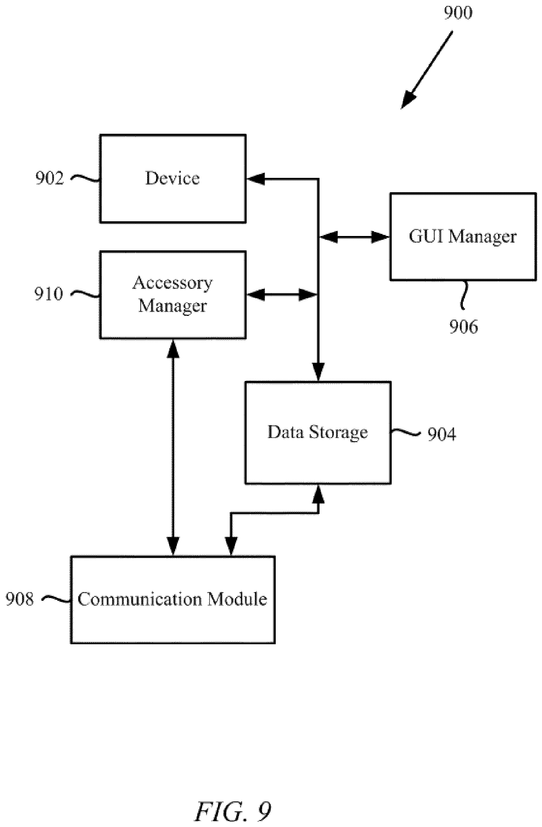

Fig. 9 is a block diagram of an arrangement 900 of functional modules utilized by an electronic device. The electronic device can, for example, be tablet device 100. The arrangement 900 includes an electronic device 902 that is able to output media for a user of the portable media device but also store and retrieve data with respect to data storage 904. The arrangement 900 also includes a graphical user interface (GUI) manager 906. The GUI manager 906 operates to control information being provided to and displayed on a display device. The arrangement 900 also includes a communication module 908 that facilitates communication between the portable media device and an accessory device. Still further, the arrangement 900 includes an accessory manager 910 that operates to authenticate and acquire data from an accessory device that can be coupled to the portable media device.

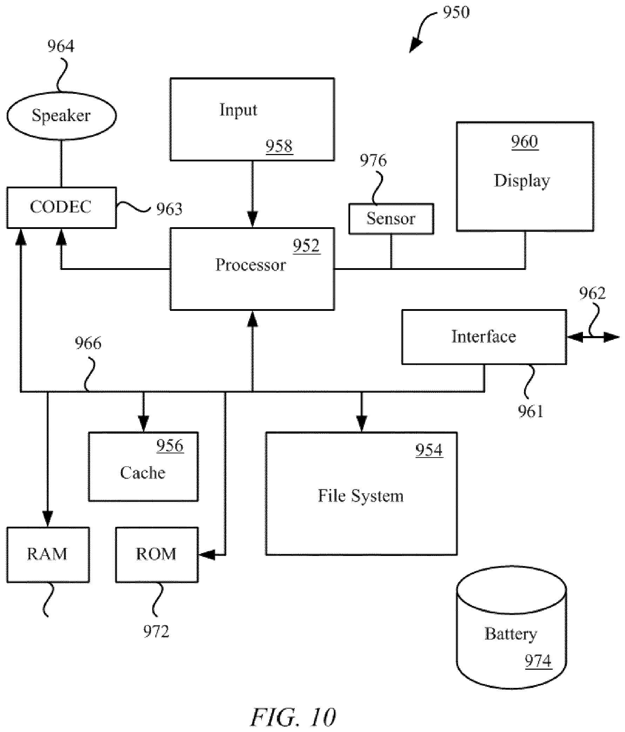

Fig. 10 is a block diagram of an electronic device 950 suitable for use with the described embodiments. The electronic device 950 illustrates circuitry of a representative computing device. The electronic device 950 includes a processor 952 that pertains to a microprocessor or controller for controlling the overall operation of the electronic device 950. The electronic device 950 stores media data pertaining to media items in a file system 954 and a cache 956. The file system 954 is, typically, a storage disk or a plurality of disks. The file system 954 typically provides high capacity storage capability for the electronic device 950. However, since the access time to the file system 954 is relatively slow, the electronic device 950 can also include a cache 956. The cache 956 is, for example, Random-Access Memory (RAM) provided by semiconductor memory. The relative access time to the cache 956 is substantially shorter than for the file system 954. However, the cache 956 does not have the large storage capacity of the file system 954. Further, the file system 954, when active, consumes more power than does the cache 956. The power consumption is often a concern when the electronic device 950 is a portable media device that is powered by a battery 974. The electronic device 950 can also include a RAM 970 and a Read-Only Memory (ROM) 972. The ROM 972 can store programs, utilities or processes to be executed in a non-volatile manner. The RAM 970 provides volatile data storage, such as for the cache 956.

The electronic device 950 also includes a user input device 958 that allows a user of the electronic device 950 to interact with the electronic device 950. For example, the user input device 958 can take a variety of forms, such as a button, keypad, dial, touch screen, audio input interface, visual/image capture input interface, input in the form of sensor data, etc. Still further, the electronic device 950 includes a display 960 (screen display) that can be controlled by the processor 952 to display information to the user. A data bus 966 can facilitate data transfer between at least the file system 954, the cache 956, the processor 952, and the CODEC 963.

In one embodiment, the electronic device 950 serves to store a plurality of media items (e.g., songs, podcasts, etc.) in the file system 954. When a user desires to have the electronic device play a particular media item, a list of available media items is displayed on the display 960. Then, using the user input device 958, a user can select one of the available media items. The processor 952, upon receiving a selection of a particular media item, supplies the media data (e.g., audio file) for the particular media item to a coder/decoder (CODEC) 963. The CODEC 963 then produces analog output signals for a speaker 964. The speaker 964 can be a speaker internal to the electronic device 950 or external to the electronic device 950. For example, headphones or earphones that connect to the electronic device 950 would be considered an external speaker.

The electronic device 950 also includes a network/bus interface 961 that couples to a data link 962. The data link 962 allows the electronic device 950 to couple to a host computer or to accessory devices. The data link 962 can be provided over a wired connection or a wireless connection. In the case of a wireless connection, the network/bus interface 961 can include a wireless transceiver. The media items (media assets) can pertain to one or more different types of media content. In one embodiment, the media items are audio tracks (e.g., songs, audio books, and podcasts). In another embodiment, the media items are images (e.g., photos). However, in other embodiments, the media items can be any combination of audio, graphical or visual content. Sensor 976 can take the form of circuitry for detecting any number of stimuli. For example, sensor 976 can include a Hall Effect sensor responsive to external magnetic field, an audio sensor, a light sensor such as a photometer, and so on.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not target to be exhaustive or to limit the embodiments to the precise forms disclosed. It will be apparent to one of ordinary skill in the art that many modifications and variations are possible in view of the above teachings within the scope of the appended claims.

## Claims

1. An electronic device (100) having a protective cover (300),
the protective cover (300) comprising:
a first attachment mechanism configured for attaching the protective cover to the electronic device (100), the electronic device (100) comprising:
a display assembly (104) configured to present a software application,
at least one processor coupled to the display assembly (104), and
at least a first (108) and a second magnetic sensor (110) coupled to the at least one processor, respectively, and configured to provide a corresponding first and second detection signal to the at least one processor;
the protective cover (300) comprising a flap (302) comprising a first foldable segment (304) including a first magnet (314) and a second foldable segment (306) including a second magnet (316), wherein the first detection signal corresponds to the first foldable segment (304), said first foldable segment being detectable by the first magnetic sensor (108) by detecting a magnetic field corresponding to the first magnet, and the second detection signal corresponds to the second foldable segment (306), said second foldable segment being detectable by the second magnetic sensor (110) by detecting a magnetic field corresponding to the second magnet,
wherein the processor is configured to use the first and the second detection signals to determine an amount of viewable display and to present the software application in accordance with the amount of viewable display, such that:
1) video content (606-2) overlaid with a graphical user interface (602-2) for modifying operations of a media player function, is displayed in a first and a second portion of the display when the first detection signal indicates that the first portion of the display is not covered by the first foldable segment and the second detection signal indicates that the second portion of the display is not covered by the second foldable segment; and
2) the graphical user interface (602-2) for modifying operations of the media player function is displayed in the first portion (404, 406) of the display, without displaying said video content, when the first detection signal indicates that the first portion (404) of the display is not covered by the first foldable segment (304) and the second detection signal indicates that the second portion (406) of the display is covered by the second foldable segment (306).

2. The electronic device as recited in claim 1, wherein the first portion of the display is viewable in a first folded configuration of the protective cover, the first folded configuration comprising the first segment folded away from the electronic device and the second segment not folded away from the electronic device.

3. The electronic device as recited in claim 2, wherein in the first folded configuration, the first magnetic sensor sends the first detection signal to the processor indicating that the first segment is not detected and the second magnetic sensor sends the second detection signal to the processor indicating that the second segment is detected, wherein the processor uses the first and second detection signals to execute the software application in accordance with the first portion of the display.

4. The electronic device as recited in claim 3, wherein the software application presents visual content only in the first portion of the display, wherein the visual content includes an interactive icon, the interactive icon being modified in accordance with the first portion of the display.

5. The electronic device as recited in claim 1, wherein an operating state of the electronic device is altered upon detecting, using the second detection signal, that the second portion of the display is uncovered by the second segment.

6. The electronic device as recited in claim 1, wherein the second portion of the display is viewable in a second folded configuration of the protective cover, the second folded configuration comprising both the first and second segments folded away from the electronic device.

7. A method for operating an electronic device (100) having a protective cover (300),
the electronic device (100) comprising a display configured to present a software application, the electronic device further comprising at least a first (108) and a second magnetic sensor (110) coupled to an at least one processor, respectively,
the protective cover (300) comprising a flap (302) comprising a first foldable segment (304) including a first magnet and a second foldable segment (306) including a second magnet,
the method comprising the steps of:
detecting, by the first magnetic sensor, said first foldable segment by detecting a magnetic field corresponding to the first magnet and providing a corresponding first detection signal to the at least one processor;
detecting, by the second magnetic sensor, said second foldable segment by detecting a magnetic field corresponding to the second magnet and providing a corresponding second detection signal to the at least one processor;
in accordance with the first and second detection signals, determining, by the at least one processor, an amount of viewable display; and
presenting the software application in accordance with the amount of viewable display, such that:
1) video content (606-2), overlaid with a graphical user interface (602-2) for modifying operations of a media player function, is displayed in a first and second portion of the display when the first detection signal indicates that the first portion of the display is not covered by the first foldable segment and the second detection signal indicates that the second portion of the display is not covered by the second foldable segment: and
2) the graphical user interface (602-2) for modifying operations of the media player function is displayed in the first portion of the display, without displaying said video content, when the first detection signal indicates that the first portion of the display is not covered by the first foldable segment and the second detection signal indicates that the second portion of the display is covered by the second foldable segment.

## Patentansprüche

1. Elektronische Vorrichtung (100) mit einer Schutzabdeckung (300), wobei die Schutzabdeckung (300) aufweist:
einen ersten Befestigungsmechanismus, der konfiguriert ist, um die Schutzabdeckung an der elektronischen Vorrichtung (100) zu befestigen, wobei die elektronische Vorrichtung (100) aufweist
einen Anzeigeaufbau (104), der konfiguriert ist, um eine Software-Anwendung zu präsentieren,
zumindest einen Prozessor, der an den Anzeigeaufbau (104) gekoppelt ist, und
zumindest einen ersten (108) und einen zweiten magnetischen Sensor (110), die jeweils mit dem zumindest einen Prozessor gekoppelt sind und konfiguriert sind, um ein entsprechendes erstes und zweites Erfassungssignal dem zumindest einen Prozessor bereitzustellen;
wobei die Schutzabdeckung (300) eine Klappe (302) aufweist, die ein erstes faltbares Segment (304), das einen ersten Magneten (314) umfasst, und ein zweites faltbares Segment (306), das einen zweiten Magneten (316) umfasst, aufweist, wobei das erste Erfassungssignal dem ersten faltbaren Segment (304) entspricht, wobei das erste faltbare Segment durch den ersten magnetischen Sensor (108) durch Erfassen eines magnetischen Feldes, das dem ersten Magneten entspricht, erfassbar ist und wobei das zweite Erfassungssignal dem zweiten faltbaren Segment (306) entspricht, wobei das zweite faltbare Segment durch den zweiten magnetischen Sensor (110) durch Erfassen eines magnetischen Feldes, das dem zweiten Magneten entspricht, erfassbar ist,
wobei der Prozessor konfiguriert ist, das erste und das zweite Erfassungssignal zu benutzen, um einen Umfang an sichtbarer Anzeige zu bestimmen und die Software-Anwendung in Übereinstimmung mit dem Umfang an sichtbarer Anzeige zu präsentieren, so dass:
1) Videoinhalt (606-2), der mit einer grafischen Benutzerschnittstelle (602-2) zum Modifizieren von Operationen einer Medienspieler-Funktion überlagert ist, in einem ersten und einem zweiten Teil der Anzeige angezeigt wird, wenn das erste Erfassungssignal anzeigt, dass der erste Teil der Anzeige nicht durch das erste faltbare Segment abgedeckt ist, und das zweite Erfassungssignal anzeigt, dass der zweite Teil der Anzeige nicht durch das zweite faltbare Segment abgedeckt ist; und
2) die grafische Benutzerschnittstelle (602-2) zum Modifizieren von Operationen der Medienspieler-Funktion in dem ersten Teil (404, 406) der Anzeige ohne Anzeigen des Videoinhalts angezeigt ist, wenn das erste Erfassungssignal anzeigt, dass der erste Teil (404) der Anzeige nicht durch das erste faltbare Segment (304) abgedeckt ist, und das zweite Erfassungssignal anzeigt, dass der zweite Teil (406) der Anzeige durch das zweite faltbare Segment (306) abgedeckt ist.

2. Elektronische Vorrichtung gemäß Anspruch 1, wobei der erste Teil der Anzeige in einer ersten gefalteten Konfiguration der Schutzabdeckung sichtbar ist, wobei die erste gefaltete Konfiguration umfasst, dass das erste Segment von der elektronischen Vorrichtung weg gefaltet ist und das zweite Segment nicht von der elektronischen Vorrichtung weg gefaltet ist.

3. Elektronische Vorrichtung gemäß Anspruch 2, wobei in der ersten gefalteten Konfiguration der erste magnetische Sensor das erste Erfassungssignal zu dem Prozessor sendet, das anzeigt, dass das erste Segment nicht erfasst wurde, und der zweite magnetische Sensor das zweite Erfassungssignal zu dem Prozessor sendet, das anzeigt, dass das zweite Signal erfasst wurde, wobei der Prozessor das erste und das zweite Erfassungssignal verwendet, um die Software-Anwendung in Übereinstimmung mit dem ersten Teil der Anzeige auszuführen.

4. Elektronische Vorrichtung gemäß Anspruch 3, wobei die Software-Anwendung visuellen Inhalt nur in dem ersten Teil der Anzeige präsentiert, wobei der visuelle Inhalt ein interaktives Symbol umfasst, wobei das interaktive Symbol in Übereinstimmung mit dem ersten Teil der Anzeige modifiziert ist.

5. Elektronische Vorrichtung gemäß Anspruch 1, wobei ein Betriebszustand der elektronischen Vorrichtung nach Erfassen, unter Verwendung des zweiten Erfassungssignales, dass der zweite Teil der Anzeige nicht durch das zweite Segment abgedeckt ist, verändert wird.

6. Elektronische Vorrichtung gemäß Anspruch 1, wobei der zweite Teil der Anzeige in einer zweiten gefalteten Konfiguration der Schutzabdeckung sichtbar ist, wobei die zweite gefaltete Konfiguration aufweist, dass sowohl das erste als auch das zweite Segment von der elektronischen Vorrichtung weg gefaltet ist.

7. Verfahren zum Betreiben einer elektronischen Vorrichtung (100) mit einer Schutzabdeckung (300), wobei die elektronische Vorrichtung (100) eine Anzeige aufweist, die konfiguriert ist, um eine Software-Anwendung zu präsentieren, wobei die elektronische Vorrichtung weiter zumindest einen ersten (108) und einen zweiten magnetischen Sensor (110) aufweist, die jeweils an zumindest einen Prozessor gekoppelt sind,
wobei die Schutzabdeckung (300) eine Klappe (302) aufweist, die ein erstes faltbares Segment (304) aufweist, das einen ersten Magneten umfasst, und ein zweites faltbares Segment (306), das ein zweiten Magneten umfasst,
wobei das Verfahren die Schritte aufweist:
Erfassen durch den ersten magnetischen Sensor des ersten faltbaren Segmentes durch Erfassen eines magnetischen Feldes, das dem ersten Magneten entspricht, und Bereitstellen eines entsprechenden ersten Erfassungssignals zu dem zumindest einen Prozessor;
Erfassen durch den zweiten magnetischen Sensor des zweiten faltbaren Segments durch Erfassen eines magnetischen Feldes, das dem zweiten Magneten entspricht, und Bereitstellen eines entsprechenden zweiten Erfassungssignales zu dem zumindest einen Prozessor;
in Übereinstimmung mit dem ersten und zweiten Erfassungssignal Bestimmen durch den zumindest einen Prozessor einen Umfang an sichtbarer Anzeige;
und Präsentieren der Software-Anwendung in Übereinstimmung mit dem Umfang der sichtbaren Anzeige, so dass:
1) Videoinhalt (606-2), der mit einer grafischen Benutzerschnittstelle (602-2) zum Modifizieren von Operationen einer Medienspieler-Funktion überlagert ist, in einem ersten und einem zweiten Teil der Anzeige angezeigt wird, wenn das erste Erfassungssignal anzeigt, dass der erste Teil der Anzeige nicht durch das erste faltbare Segment abgedeckt ist, und das zweite Erfassungssignal anzeigt, dass der zweite Teil der Anzeige nicht durch das zweite faltbare Segment abgedeckt ist; und
2) die grafische Benutzerschnittstelle (602-2) zum Modifizieren von Operationen der Medienspieler-Funktion in dem ersten Teil der Anzeige ohne Anzeigen des Videoinhalts angezeigt ist, wenn das erste Erfassungssignal anzeigt, dass der erste Teil der Anzeige nicht durch das erste faltbare Segment abgedeckt ist, und das zweite Erfassungssignal anzeigt, dass der zweite Teil der Anzeige durch das zweite faltbare Segment abgedeckt ist.

## Revendications

1. Un dispositif électronique (100) avec un couvercle de protection (300),
le couvercle de protection (300) comprenant :
un premier mécanisme de fixation configuré pour fixer le couvercle de protection au dispositif électronique (100), le dispositif électronique (100) comprenant :
un bloc afficheur (104) configuré pour présenter une application logicielle ;
au moins un processeur couplé au bloc afficheur (104) ; et
au moins un premier (108) et un second (110) capteur magnétiques respectivement couplés à l'au moins un processeur, et configurés pour délivrer à l'au moins un processeur un premier et un second signal de détection correspondants,
le couvercle de protection (300) comprenant un volet (302) comprenant un premier segment repliable (304) comprenant un premier aimant (314) et un second segment repliable (306) comprenant un second aimant (316), le premier signal de détection correspondant au premier segment repliable (304), ledit premier segment repliable étant détectable par le premier capteur magnétique (108) par détection d'un champ magnétique correspondant au premier aimant, et le second signal de détection correspondant au second segment repliable (306), ledit second segment repliable étant détectable par le second capteur magnétique (110) par détection d'un champ magnétique correspondant au second aimant,
dans lequel le processeur est configuré pour utiliser le premier et le second signal de détection pour déterminer une étendue d'afficheur visible et pour présenter l'application logicielle en considération de l'étendue d'afficheur visible de telle sorte que :
1) un contenu vidéo (606-2), avec en superposition une interface utilisateur graphique (602-2) pour modifier des opérations d'une fonction de lecteur de media, soit affiché dans une première et une seconde partie de l'afficheur lorsque le premier signal de détection indique que la première partie de l'afficheur n'est pas couverte par le premier segment repliable et que le second signal de détection indique que la seconde partie de l'afficheur n'est pas couverte par le second segment repliable ; et
2) l'interface utilisateur graphique (602-2) pour la modification d'opérations de la fonction de lecteur de media soit affiché dans la première partie (404, 406) de l'afficheur, sans affichage dudit contenu vidéo, lorsque le premier signal de détection indique que la première partie (404) de l'afficheur n'est pas couverte par le premier segment repliable (304) et que le second signal de détection indique que la seconde partie (406) de l'afficheur est couverte par le second segment repliable (306).

2. Le dispositif électronique tel qu'énoncé dans la revendication 1, dans lequel la première partie de l'afficheur est visible dans une première configuration pliée du couvercle de protection, la première configuration pliée comprenant le premier segment déplié à l'écart du dispositif électronique et le second segment non déplié à l'écart du dispositif électronique.

3. Le dispositif électronique tel qu'énoncé dans la revendication 2, dans lequel, dans la première configuration pliée, le premier capteur magnétique envoie le premier signal de détection au processeur indiquant que le premier segment n'est pas détectée et le second capteur magnétique envoie le second signal de détection au processeur indiquant que le second segment est détecté, le processeur utilisant le premier et le second signal de détection pour exécuter l'application logicielle en considération de la première partie de l'afficheur.

4. Le dispositif électronique tel qu'énoncé dans la revendication 3, dans lequel l'application logicielle ne présente un contenu visuel que dans la première partie de l'afficheur, dans lequel le contenu visuel comprend une icône interactive, et dans lequel l'icône interactive est modifiée en considération de la première partie de l'afficheur.

5. Le dispositif électronique tel qu'énoncé dans la revendication 1, dans lequel un état de fonctionnement du dispositif électronique est modifié sur détection, à l'aide du second signal de détection, que la seconde partie de l'afficheur est découverte par le second segment.

6. Le dispositif électronique énoncé dans la revendication 1, dans lequel la seconde partie de l'afficheur est visible dans une seconde configuration pliée du couvercle de protection, la seconde configuration pliée comprenant le premier et le second segment tous deux dépliés à l'écart du dispositif électronique.

7. Un procédé de mise en œuvre d'un dispositif électronique (100) possédant un couvercle de protection (300),
le dispositif électronique (100) comprenant un afficheur configuré pour présenter une application logicielle, le dispositif électronique comprenant en outre au moins un premier (108) et un second (110) capteur magnétiques respectivement couplés à au moins un processeur,
le couvercle de protection (300) comprenant un volet (302) comprenant un premier segment repliable (304) comprenant un premier aimant, et un second segment repliable (306) comprenant un second aimant,
le procédé comprenant les étapes de :
détection, par le premier capteur magnétique, dudit premier segment repliable par détection d'un champ magnétique correspondant au premier aimant et délivrance d'un premier signal de détection correspondant à l'au moins un processeur ;
détection, par le second capteur magnétique, dudit second segment repliable par détection d'un champ magnétique correspondant au second aimant et délivrance d'un second signal de détection correspondant à l'au moins un processeur ;
en fonction du premier et du second signal de détection, détermination, par l'au moins un processeur, d'une étendue d'afficheur visible ; et
présentation de l'application logicielle l'application logicielle en considération de l'étendue d'afficheur visible de telle sorte que :
1) un contenu vidéo (606-2), avec en superposition une interface utilisateur graphique (602-2) pour modifier des opérations d'une fonction de lecteur de media, soit affiché dans une première et une seconde partie de l'afficheur lorsque le premier signal de détection indique que la première partie de l'afficheur n'est pas couverte par le premier segment repliable et que le second signal de détection indique que la seconde partie de l'afficheur n'est pas couverte par le second segment repliable ; et
2) l'interface utilisateur graphique (602-2) pour la modification d'opérations de la fonction de lecteur de media soit affiché dans la première partie de l'afficheur, sans affichage dudit contenu vidéo, lorsque le premier signal de détection indique que la première partie de l'afficheur n'est pas couverte par le premier segment repliable et que le second signal de détection indique que la seconde partie de l'afficheur est couverte par le second segment repliable.
